# EUROPEAN PATENT SPECIFICATION

(11) **EP 2 642 281 B1**
(45) Date of publication and mention of the grant of the patent: **07.01.2015**
(21) Application number: 13000076.3
(22) Date of filing: 09.01.2013
(51) Int. Cl.: G01N 27/90

(54) **An eddy current array probe and method for lift-off compensation during operation without known lift references**
Wirbelstrom-Array-Sonde und Verfahren zur Abstandskompensation während des Betriebs ohne bekannte Abstandsangaben
Sonde de réseau à courant de Foucault et procédé de compensation de décollement pendant le fonctionnement sans références de levage connues

(30) Priority: 22.03.2012 US 201213427205
(43) Date of publication of application: 25.09.2013
(73) Proprietor: Olympus NDT, Inc., Waltham, MA 02453 (US)
(72) Inventor: Lepage, Benoit, Quebec, G2B 5E7 (CA)
(74) Representative: Grosse, Rainer

(56) References cited:
- US-A1- 2012 007 595

## Description

### FIELD OF THE INVENTION

The present invention relates to non-destructive testing and inspection systems (NDT/NDI), and more particularly to Eddy Current Array technology (ECA), eddy current probes etched on printed circuit board and lift-off compensation.

### BACKGROUND OF THE INVENTION

Eddy current inspection is commonly used to non-destructively detect flaws in surfaces of manufactured components fabricated from a conductive material, such as bars, tubes, and special parts for automotive, aeronautic or energy industries. Over the years, eddy current sensors have been designed with different configurations and shapes.

Typical eddy current sensor configurations include impedance bridge, pitch-catch (alternatively called reflection or transmit-receive) and differential configurations, but can also include more complex combinations such as pitch-catch with differential receivers, multi-differential, etc. An even greater variety of probe shapes has been developed over the years, with a few of them being truly successful configurations, as known in the industry.

One such known first type of eddy current sensor, named orthogonal, cross-wound or plus point, is mounted on a cube or a cross-shaped core, with two coils wrapped orthogonally to each other. One of the coils is the driver and is wrapped perpendicularly to the other coil core axis, used as the receiver. On this particular orthogonal sensor, the driver and the receiver coils are positioned perpendicularly to the component to inspect. This feature decouples the driver magnetic field from the sensitive axis of the receiver, thereby reducing the sensitivity of the receiver to surface noise that does not represent a flaw.

With the advances of printed circuit board (PCB) technologies over the last decades, it is now possible to manufacture some eddy current sensor shapes and configurations on a thin flexible support. Even more interesting is the use of these manufacturing technologies to manufacture eddy current array probes, since the reduced cost, flexibility and reproducibility are critical factors for a successful array probe design. The present assignee's pending United States patent application serial no. 12/832,620 describes how to build an orthogonal probe with the printed circuit board technology. The contents of said 12/832,620 application are incorporated by reference herein.

Many eddy current sensors generate a very strong signal representative of variations in the distance (lift-off) between the sensor and inspected part. Such sensors referred to herein as being of a second type are commonly referred to as having an "absolute" response because they provide relatively direct information of the coupling between the sensor and the inspected component. On the other hand, a few configurations (including the orthogonal and some differential arrangements) only exhibit a reduction in sensitiveness with increasing lift-off. Such configurations are then ideal to conduct an inspection over irregular parts (such as welds or hot rolled bars) or when the inspection environment cannot provide a perfectly stable lift-off.

Still, even for orthogonal and differential sensors, the potential sensitivity variations related to corresponding lift-off variations are an important limiting factor for the detection capabilities of eddy current sensors. This problem is even more important for eddy current array probes which include several independent eddy current channels because it is easier to maintain a constant lift-off for a single sensor than for a sensor array. Various terms used herein have the following definitions:
(i) An **eddy current sensor** is a complete coil arrangement capable of generating eddy currents in the test part and receiving the magnetic field produced by those eddy currents;
(ii) An **Eddy Current Array** (ECA) **probe** is a complete assembly including several sensors; and
(iii) An **Eddy Current Array** (ECA) **channel** is a unique combination of sensor and test conditions (frequency, gain, etc), such that a thirty two sensor ECA probe driven with two test frequencies would generate, for example, sixty four channels.

U.S. patent 5,371,461 discloses a means for compensating the lift-off for an ECA probe made out of etched coils by combining differential sensors for defect detection and pitch-catch sensors for lift-off measurement in the same probe. In this patent, the added pitch-catch sensors require additional coils to be etched in the probe, which adds to the probe complexity and size. The contents of U.S. patent 5,371,461 are incorporated by reference herein.

The method presented in U.S. patent 5,371,461 also requires the use of a precise lift-off reference to calibrate the lift-off measurement channels. Such a reference may be very difficult to obtain for complex and/or irregular shaped parts. This lift-off reference also adds to the complexity of the solution regarding its day to day usage because of the additional calibration steps and the precision level involved.

Other methods found in the prior art (for example, in U.S. publication 20030071615 or U.S. patent 4,727,322) include the use of a pre-defined impedance plane relative to a set of measured variables, including lift-off. These methods require intensive calculation and/or experimental data to achieve results on very limited set of probe and part configurations. US patent application 2012/0007595 A1 discloses a 2D coil and a method of using the 2D wound EC sensor for reproducing the Eddy Current Testing (ECT) response of a prior art 3D orthogonal sensor. The 3D orthogonal sensor is conventionally wound onto a 3D core, with at least some of the surfaces being un-parallel to the surface be inspected. Using the herein disclosed 2D configuration allows the use of printed circuit board technologies for the manufacturing of these EC sensors. The herein disclosed method and the associated 2D EC sensors are particularly useful for reproducing the EC effect of conventional orthogonal probe arrays.

Accordingly, it is an object of the disclosure to provide a means for compensating the lift-off sensitivity variations for either a differential or orthogonal eddy current probe array without the use of additional coils.

It is also an object of the disclosure to provide a means for compensating the lift off without the need to calibrate the probe on a fixed lift-off reference.

It is a further object of the disclosure to have a means for compensating the lift-off without the need for pre-generated tables specific to an application or probe.

A still further object of the disclosure is to reduce the number of interconnections in the probe, thus allowing a more compact probe design.

Yet another object of the disclosure is to enable conducting the lift-off compensation calibration and detection channel calibration simultaneously.

Still another object of the disclosure is to eliminate the need for pre-calculated lift-off tables which are typically dependent on the inspected material and sensor characteristics (test frequency, sensor size, etc).

### SUMMARY OF THE DISCLOSURE

The invention provides an EC probe array system for detecting flaws in a test object is provided. That system includes:
(a) an EC coil arrangement including:
   (i) a plurality of orthogonal EC sensors arranged in channels and configured to induce eddy currents in the test object and to sense and output first signals representative of flaws in the test object;
   (ii) a plurality of absolute EC sensors configured to produce from the test object second signals indicative of a lift-off distance of said orthogonal and absolute EC sensors relative to said test object, said EC coil arrangement being configured so that a pre-determined or given ratio is established between said second signals and said first signals, at different lift-off distances;
(b) a setup table comprising calibration values for said orthogonal EC sensors with corresponding lift-off compensation values for each of said channels based on said second signals; and
(c) a processor or acquisition unit responsive to said calibration and lift-off compensation values in said setup table and to the second signals and configured to convert said first signals obtained from said orthogonal EC sensors during actual testing of said test object, so as to obtain third signals which are representative of said Eddy Currents in said test object, said third signals being substantially independent of actual lift-off distances prevailing between said EC sensors and said test object at the time of obtaining said first signals during actual testing.

In further preferred embodiments, the EC coil arrangement is provided on a printed circuit board. The EC coil arrangement may comprise coils configured as overlapped coils and configured as driver and receiver coils. The processor may drive the orthogonal absolute channels sensors simultaneously and with a pitch-catch type configuration. Also, orthogonal and absolute channels may use the same sets of drive coils to enable faster acquisition and more stable signals.

In the method according to the present disclosure, the aforementioned EC coil arrangement is utilized to perform a probe array system setup including setting at least a gain value and preferably a phase rotation value on each orthogonal channel relative to a known calibration notch using the orthogonal EC sensors. Relative to each orthogonal channel, an amplitude vector is also obtained by using the absolute EC sensors and gain and absolute vector length values are stored in a setup table. Subsequent to preparing the setup table, actual testing is conducted by acquiring data for the orthogonal and absolute channels to obtain raw orthogonal data and raw absolute data for each channel. Amplitude vector lengths are calculated and the raw orthogonal data is compensated for the lift-off effects utilizing the absolute vector lengths and/or calibration gain values to obtain compensated data for the object being tested.

Other features and advantages of the present invention will become apparent from the following description of the invention which refers to the accompanying drawings.

### BRIEF DESCRIPTION OF THE DRAWINGS

Fig. 1 illustrates a simplified representation of the prior art flat shaped orthogonal eddy current array probe built on a two layer printed circuit board
Fig. 2 is the four layer printed circuit board extension of the Fig. 1 representation and the illustration of the possible shape of the orthogonal channels
Fig. 3 illustrates the absolute channels created for the probe structure of Fig. 2
Fig. 4 shows that cracks affecting the orthogonal channels will not affect the corresponding absolute channel.
Fig. 5 shows the absolute and orthogonal sensitive area on the four layer probe of Fig. 2.
Fig. 6 illustrates the scan of a calibration block including a reference notch and a probe lift-off.
Fig. 7 is the impedance plane results obtain on the orthogonal channels from the scan of Fig. 6 block with four defined lift off condition.
Fig. 8 is the impedance plane results obtain on the absolute channels from the scan of Fig. 6 block with four defined lift off condition.
Fig. 9 proposes an amplitude based analysis of the test signals shown on Fig. 7 and Fig. 8.
Fig.10 is a flowchart describing the proposed calibration method.
Fig.11 is a flowchart describing the proposed signal processing method.
Fig. 12 shows a hardware configuration for a system of the invention.

### DETAILED DESCRIPTION OF THE INVENTION

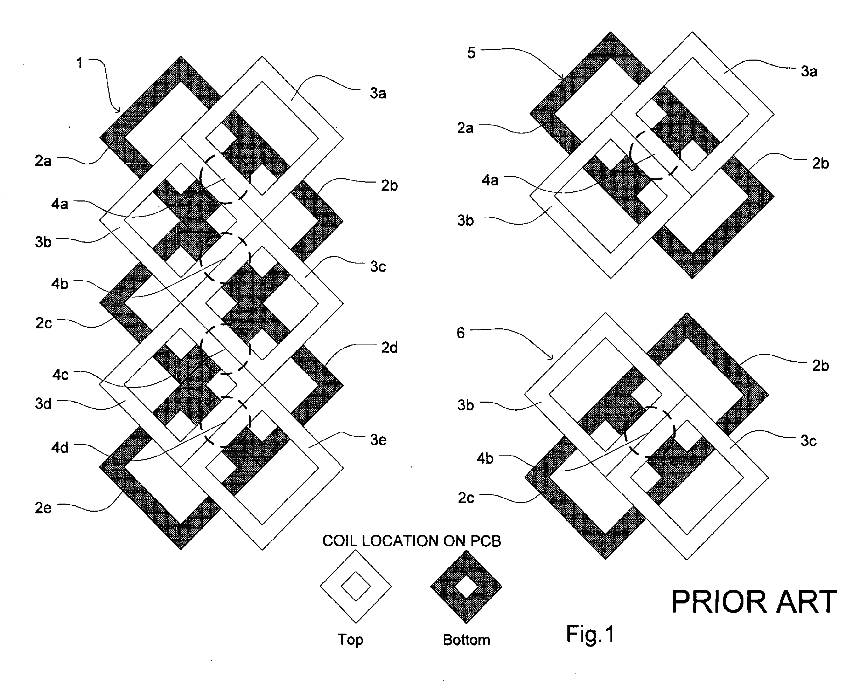

Related patent application serial no. 12/832,620 describes how to build an ECA probe on a printed circuit board. The contents of patent application serial no. 12/832,620 and of 12/847,074 are incorporated by reference herein. The structure presented in application serial no. 12/832,620 is disposed on two PCB layers. A simplified representation of such structure is shown on Fig. 1 for a four sensor orthogonal ECA probe **1** including five driver coils (**2a** to **2e**) and five receiver coils (**3a** to **3e**) resulting in four sensitive spots (**4a** to **4d**) with orthogonal sensor response. The coil arrangement (such as **5** and **6**) that generates orthogonal sensor response will be referenced to as "orthogonal channels" in this document.

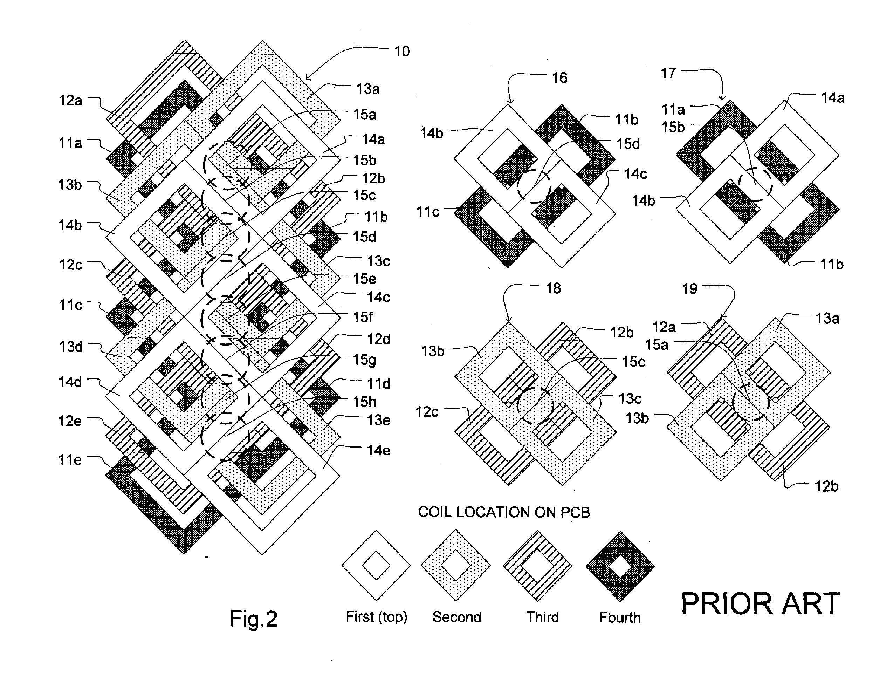

As first stated in paragraph [0035] of the mentioned application, it is also possible to use the multi-layer capabilities of the printed circuit boards to increase the resolution of the orthogonal ECA probe. Fig. 2 illustrates a four layer version of the ECA probe **10** built using this principle. The two bottom layers (**11a** to **11e** and **12a** to **12e**) are connected to driver signals while the two upper layers (**13a** to **13e** and **14a** to **14e**) are connected to receiver signals in order to generate orthogonal channels such as **16, 17, 18** and **19.** The bottom layer coils **11a** to **11e** operate with the top layer coils **14a** to **14e** to generate a first set of orthogonal channels while coils **12a** to **12e** operate with the coils **13a** to **13e** to generate a second set of orthogonal channels.

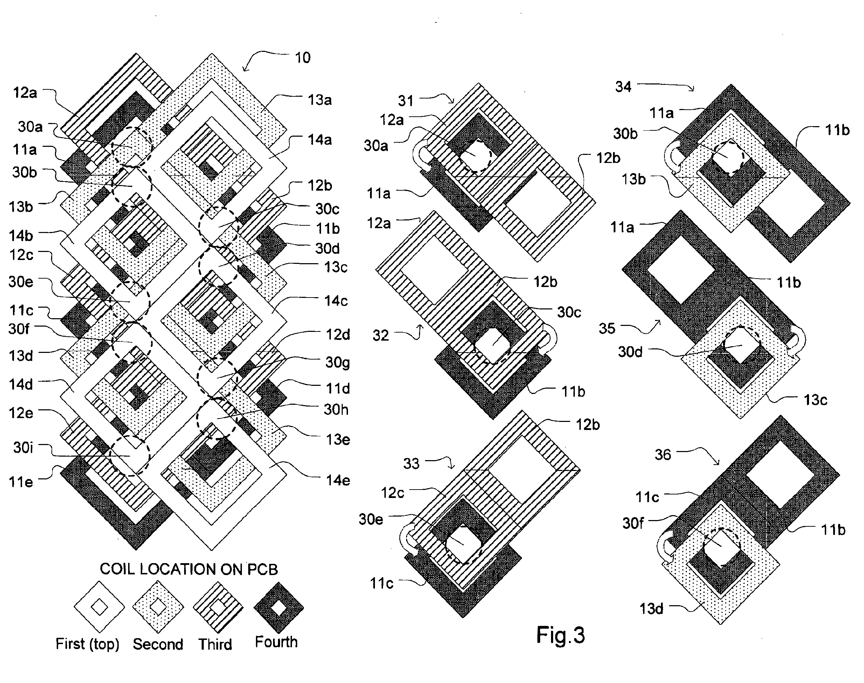

From the probe structure shown on Fig. 2, it is an object of the current invention to teach how to obtain absolute channels for monitoring the lift-off. Fig. 3 illustrates how these channels are built from the structure of probe **10.** Some coils, partially overlapping the driver coils, are connected as receivers. For example, pitch-catch sensor configuration **36** uses two fourth layer coils (**11b** and **11c**) as a driver and one second layer coil (**13d**) as receiver. In another example, pitch-catch configuration **33** uses two third layer coils (**12b** and **12c**) as a driver and one fourth layer coil (**11c**) as a receiver. As a matter of fact, the same coil can be used as a driver and a receiver through the sequence (as already disclosed in prior art patent 6,344,739). Using coil combinations similar to **31, 32, 33, 34, 35** and **36** for the whole probe **10,** we obtain a set of nine sensitive areas (**30a** to **30i**) with absolute sensor response extending over the whole probe length. The coil arrangements (such as **31** to **36**) that generate absolute sensor response will be referred to herein as "absolute channels" in this disclosure.

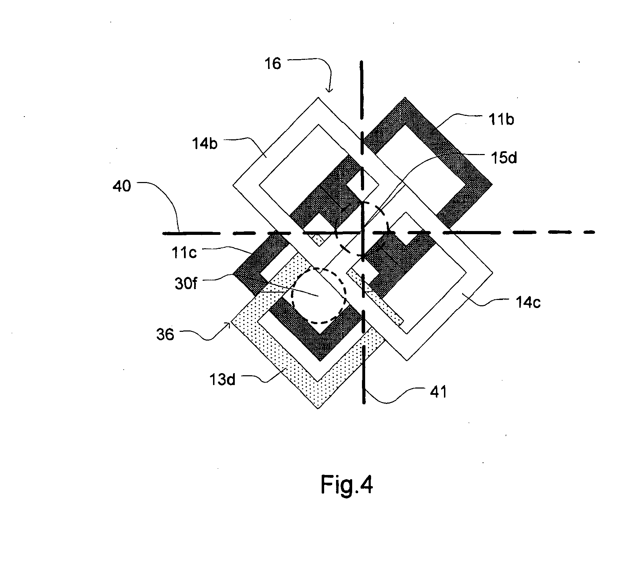

The newly created absolute channels are inherently very sensitive to lift off, because the proximity of the inspected part will directly impact the magnetic field flux in the shared area of the driver and receiver coils (**11c** and **13d** for example) defining the sensitive area (**30f** for example) of the absolute channel (**36** for example). Fig. 4 also demonstrates that the new absolute channel will not be sensitive to a longitudinal **41** or transversal **40** crack to be detected by the orthogonal channel because the absolute channel sensitive area (**30f** for example) is not in line with longitudinal or transverse crack when this crack is located on the orthogonal channel sensitive area (**15d** for example). So, the described structure makes it possible to substantially completely decouple the lift-off and crack measurements for this probe.

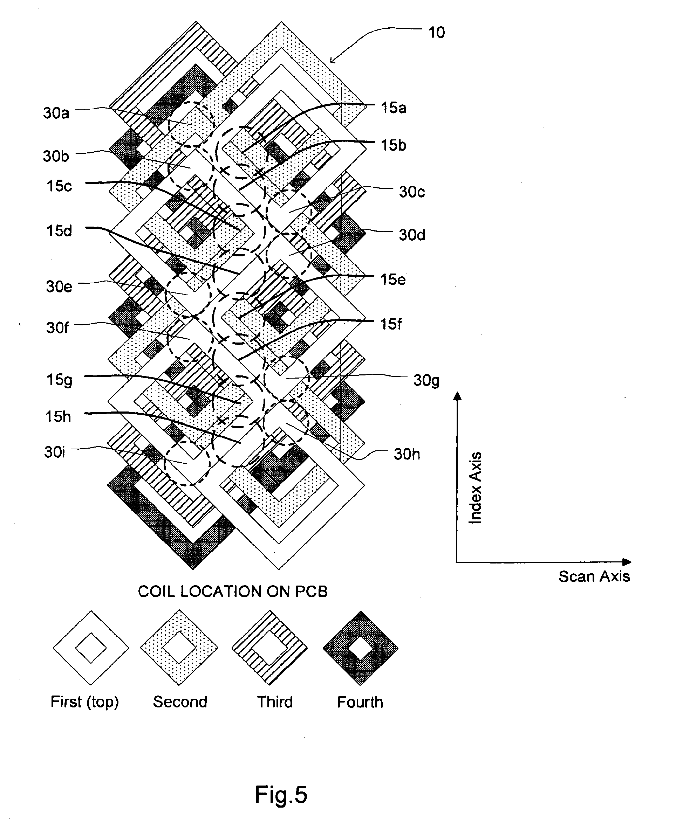

As further demonstrated on Fig. 5, each orthogonal channel sensitive area is located exactly in between two absolute channels sensitive areas on the index axis. So, we can use the average value between these two absolute channels to produce an approximation of the lift-off conditions for the corresponding orthogonal channel.

It must be understood that the selection of coils to be used in the absolute channel construction was made in order to acquire the orthogonal and absolute channels simultaneously and with a pitch-catch type configuration which is naturally more stable than an impedance bridge. For example, orthogonal channel **16** and absolute channel **36** use the same set of two driver coils **11b** and **11c.** So, these two channels can be acquired simultaneously by the acquisition electronics. This configuration is advantageous because it allows a faster acquisition (through simultaneous operation) and a stable signal, but it is not a mandatory requirement so there will be other possible arrangements respecting the essence of the invention.

Connecting the driver coils as part of an impedance bridge to build the absolute channels, for example, is another method to obtain a valid set of absolute channels for lift-off monitoring without adding new coils in the probe structure. It is also possible to envision other ECA probe types respecting the scope of this invention. For example, in U.S. patent 5,371,461 Fig. 3, one could dispose of the compensation coil 52 of U.S. patent 5,371,461 by connecting driver coil 42 of said patent through an impedance bridge.

Now that we have described means for building channels for detection (orthogonal channels in the preferred embodiment) and lift-off monitoring (absolute channels made out from a pitch-catch sensor arrangement in the preferred embodiment), we describe how these signals are processed in order to obtain a lift-off compensated eddy current probe array without the use of a lift-off reference.

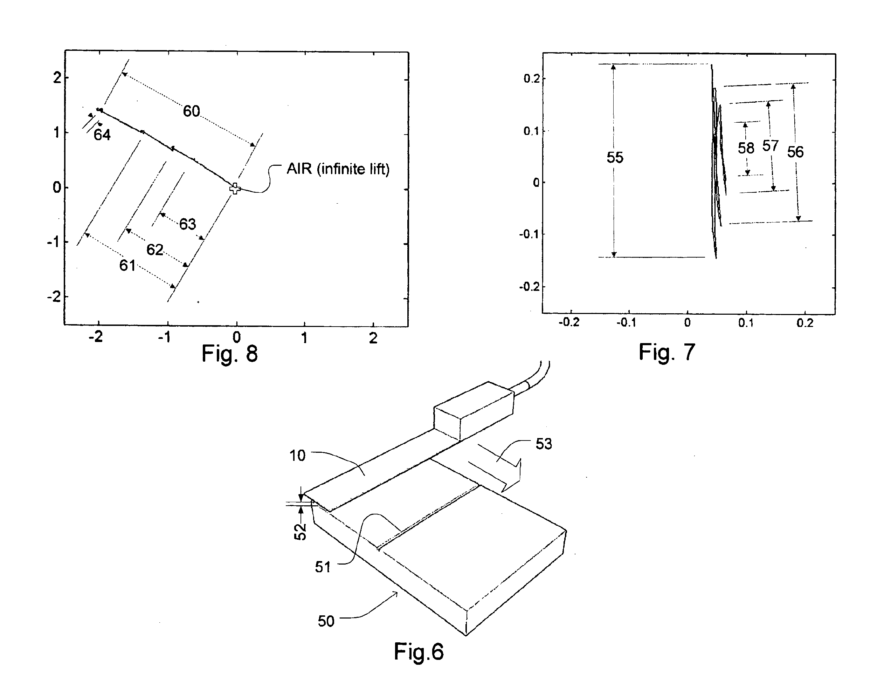

As shown on Fig. 6, a reference block **50** comprising a long transversal reference notch **51** is scanned in direction **53** with a given lift-off **52.** The probe is first nulled in AIR to generate a reference point for an infinite lift off condition, which will become important later in this discussion. The block **50** is then scanned four times with increasing lift off (in the example ; Lift-off A = 0mm ; Lift-off B = 0.63mm; Lift-off C = 1.27mm ; Lift-off D = 1.9mm) to provide the required background information needed to describe the invention.

Fig. 7 shows the impact of lift-off on the reference defect detection amplitude on orthogonal channel **16** impedance plane display. In this case, defect amplitude **55** is obtained with lift-off A, defect amplitude **56** is obtained with lifi-0ff B, defect amplitude **57** is obtained with lift-off C and defect amplitude **58** is obtained with lift-off D.

Fig. 8 shows the impact of lift-off on absolute channel **36** impedance plane display. In this case, the total signal amplitude vector **60** results from lift-off A , the total signal amplitude vector **61** results from lift-off B, the total signal amplitude vector **62** results from lift-off C and the total signal amplitude vector **63** results from lift-off D. It is interesting to note that reference notch **51** generates very weak signals on Fig. 7 compared to the strong lift-off signal. For example, with lift A, defect amplitude **64** is orders of magnitude lower than the corresponding total signal amplitude vector **60** resulting from lift A. This is a desirable behavior since we want to use the absolute channels for lift-off monitoring only.

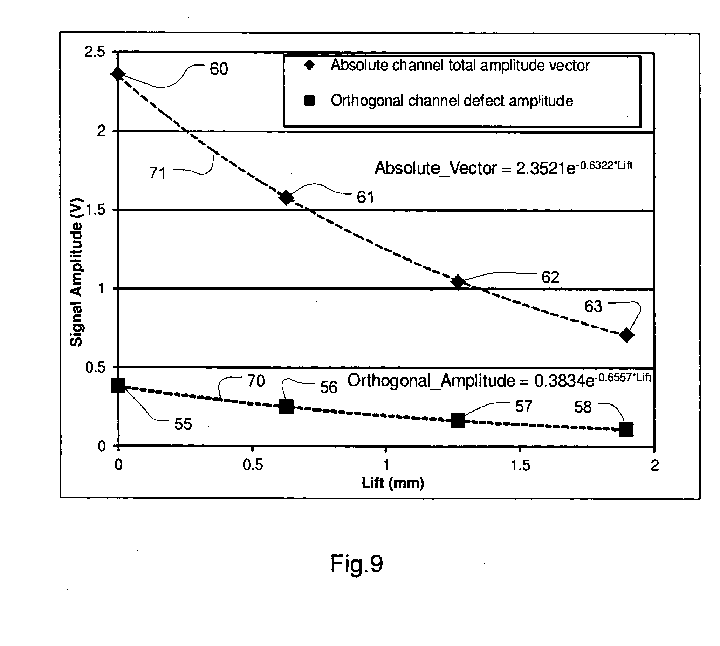

Fig. 9 shows a graph representing a combined view of the defect amplitude readings **55**, **56, 57, 58** on the orthogonal channels and the total signal amplitude vector readings **60, 61, 62** and **63** on the absolute channels relative to the lift-off conditions. As seen in the figure, both data series can be fitted by exponential curves **70** and **71**. Moreover, the shape of curves **70** and **71** (which is defined by the exponent) is almost the same (e^{-0.6322*Lift} vs. e^{-0.6557*Lift} in this example). This observation is very important because it means the ratio "Ortho_Amplitude(Lift) / Abs_Vector(Lift)" is almost independent of the lift. For example: 0.3834*e^{-0.6557*Lift}/2.3521 e⁻ 0.6322*Lift = 0.163*e^{-0.0235*Lift} ... which is about 0.2 dB/mm variation compared to about 5.7dB/mm for the orthogonal channel. This later observation forms the foundation of the signal processing method of the invention. For the following discussion we will approximate "Ortho_Amplitude(Lift) / Abs_Vector(Lift)" as being a constant, pre-determined value totally independent of lift-off. It must be understood that the use of the same coil set for defect detection and lift-off monitoring contributes to having similar shaped curves, since the shape of the curve is provided by the magnetic coupling between coils and the inspected part. Thus, by dynamically comparing the orthogonal and absolute amplitudes at each measured point (channel), the orthogonal amplitude can be connected for the actual prevailing lift-off during each measurement, without specific knowledge of the lift-off amount, per se.

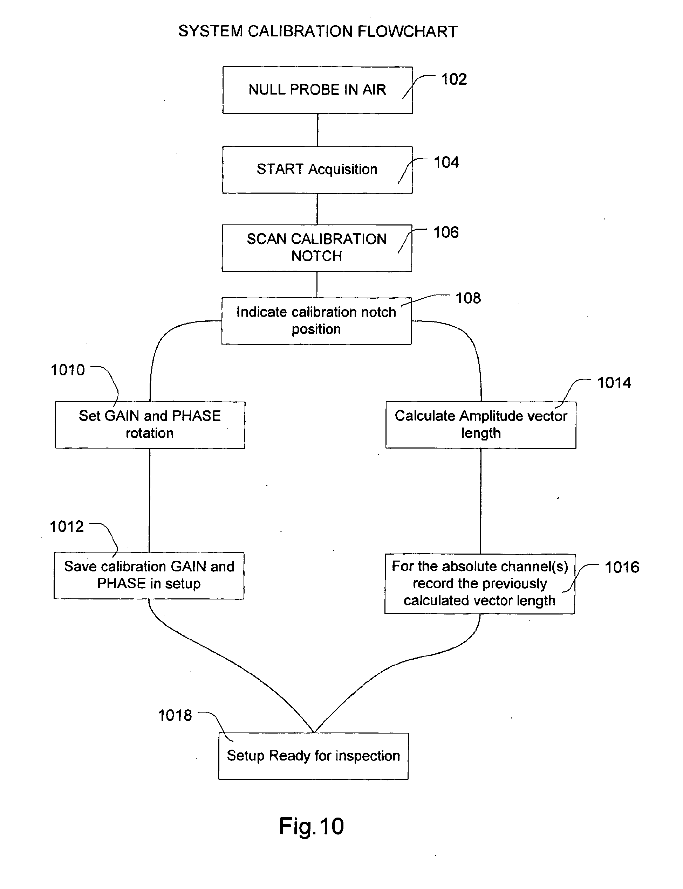

We now turn our attention to Fig.10, which describes how the probe is to be calibrated with a reference notch such as **51** but without a known reference lift-off. We first NULL the probe in AIR, (**Step 102**) start the acquisition (**Step 104**), scan the reference notch (**Step 106**) and define the notch position by manually or automatically indicating where the notch signal begins and ends (**Step 108**). At this point, the information we have is equivalent to the signals presented in Fig. 8 and Fig. 7 but for a single unknown lift-off. In other words, if notch **51** is scanned in the calibration process with lift-off B, the system should be able to read defect amplitude **56** and total amplitude vector **61** but the actual value of lift-off B will be unknown to both the acquisition system and the user.

The information available at this point is first used to calibrate the orthogonal channels by applying a calibration GAIN and ROTATION on the raw signal (**Step 1010**), in order to reach a pre-defined value for the reference defect **51.** This pre-defined value (which typically includes both an angular and amplitude target) is common to all orthogonal channels and thus makes it possible to obtain a uniform detection of the reference defect **51** for all orthogonal channels. The calibration GAIN and ROTATION for each orthogonal channel is saved in the setup (**Step 1012**).

Simultaneously, we use the information generated in [0046] on the absolute channels to calculate the vector length between AIR and the signal's baseline obtained on the calibration block **50** (**Step 1014**). A single absolute vector length value (which could in fact be the average between two absolute channels or other absolute channel combinations adapted to the probe and application) is saved in the setup and associated with its corresponding orthogonal channel. For example, in probe **10**, if we use absolute channels at position **30a** and **30b** to compensate the lift-off for the orthogonal channel at position **15a** we could average absolute channels at position **30a** and **30b** and save this pre-determined value in the setup with reference to the channel at position **15a.** This value will be referenced here as "Absolute_RefLenght(n,Cal_Lift)" where "n" is the orthogonal channel# identifier and "Cal_Lift" is the lift-off condition present during calibration **(Step 1016).**

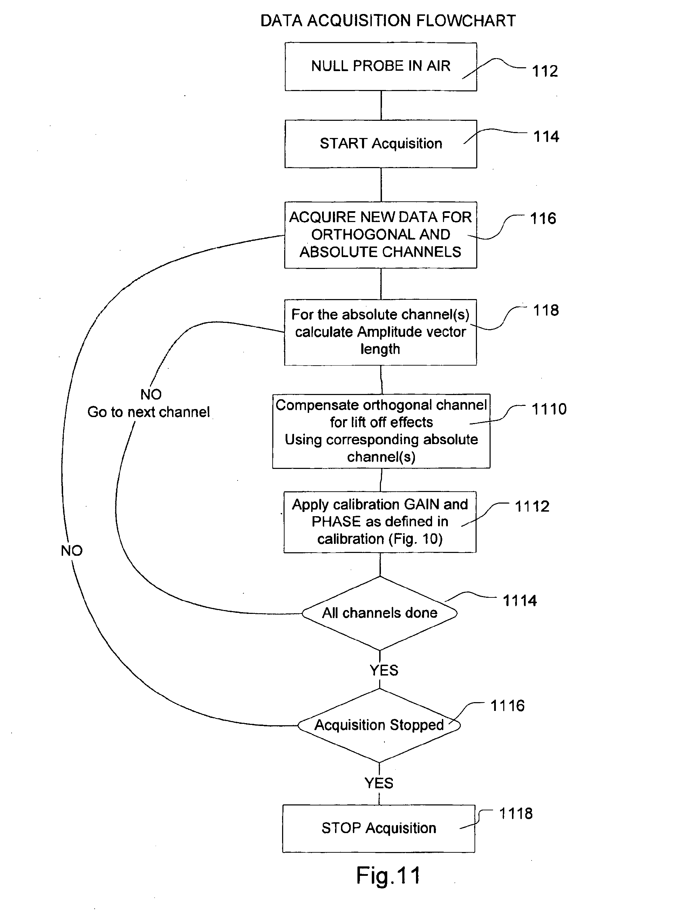

Now looking at Fig. 11, we will use the information now included in the calibration file and the properties of the "Ortho_Amplitude(Lift) / Abs_Vector(Lift)" ratio to generate a lift compensated orthogonal channel. The process described on Fig. 11 is applied dynamically (during the acquisition) but could easily be applied in post-processing as well (after the acquisition). The first step of the process is, again, to NULL the probe in AIR (**Step 112**) in order to have an infinite lift-off reference. After starting the acquisition (**Step 114**), each new data set corresponding to the impedance plane results (x,y) for one given orthogonal channel at one given scan position is processed separately (**Step 116**). Such data set will be referenced here as "Ortho_raw(n, Lift)" where "n" is the orthogonal channel# identifier and "Lift" is the lift-off condition at the time of measuring the data set. The first step in processing is to find the absolute channel total vector length, at the current scan position, corresponding to the orthogonal channel currently being processed (**Step 118**). The relationship between the orthogonal and absolute channel must be the same as previously defined in calibration. This value will be referenced here as "Absolute_VLenght(n, Lift)" where "n" is the orthogonal channel# identifier and "Lift" is the lift-off condition at the time of measuring the data set.

Ortho_raw(n,Lift) is then processed with the following relationship to generate a lift-off compensated orthogonal channel reading; "Ortho_compensated(n, Cal_Lift) = (Ortho_raw(n,Lift)/Absolute_Vlenght(n,Lift))*Absolute_RefLenght(n)" (**Step 1110**). The generated "Ortho_compensated(n,Cal_Lift)" channel is then relatively independent of the current lift-off but is then dependent on the lift-off present during the system calibration. To remove this dependency and thus provide a completely lift off independent reading, the calibration GAIN and PHASE are applied to Ortho_compensated(n,Cal_Lift) (**Step 1112**), until all channels are so processed (**Steps 1114, 1116** and **1118**). As an end result, for a given flaw size, the system should generate a uniform defect signal amplitude no matter which orthogonal channel detects the flaw and without regard to the calibration and inspection lift-off.

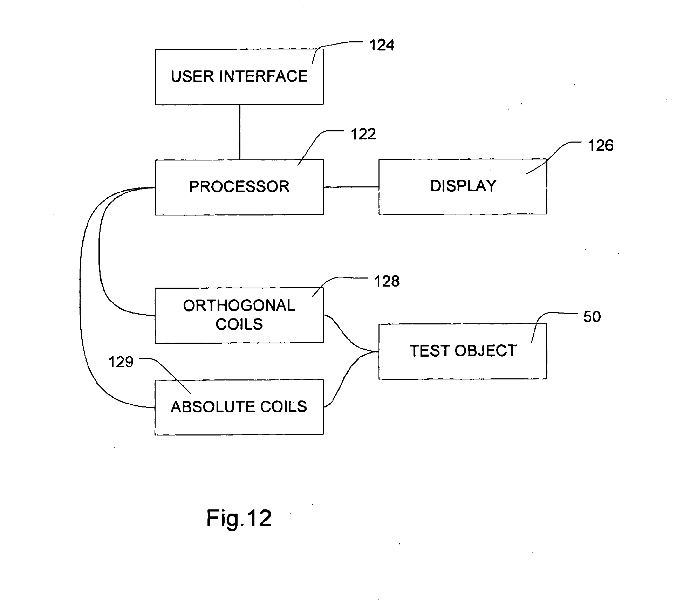

Fig. 12 shows a hardware configuration of a typical system that can implement the foregoing method. The subject EC probe array system comprises a processor **122** or acquisition unit which is operable and controlled through a user interface **124** and which can display test results, commands and the like, display **126.** Orthogonal sensors **128**, as well as absolute sensors or coils **129** interact, electromagnetically, with the test object **50** to obtain the various signals and to implement the methods described above via software program instructions stored or loaded onto the processor **122**, in a manner well known in the art.

It is important to point out that the described lift compensation method can easily be adapted to operate a multi-frequency inspection. This can be done either by generating absolute and orthogonal channels for each frequency or by using a unique set of absolute channels to compensate the multi-frequency orthogonal channels.

It is also important to mention that while the figures and description describes an ECA probe with eight orthogonal sensors, the method proposed in this invention is applicable as long as the coil configuration makes it possible to build at least one sensor for defect detection and one sensor for lift-off measurement.

In the foregoing embodiments, the EC sensors have been described and depicted as being coil windings. However, as will be recognized by one of skill in the art, other types of magnetic field sensors can be used, such as, for example, GMR ("Giant Magneto Resistance"), AMR ("Anisotropic Magneto Resistance"), or Hall Effect sensors.

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

## Claims

1. An EC (Eddy Current) system for detecting flaws in a test object, the system comprising:
(a) an EC array probe configured with a sensor arrangement including:
(i) a plurality of first type EC sensors which are orthogonal sensors (128) arranged in channels and configured to induce eddy currents in the test object and to sense and output first signals representative of flaws in the test object; **characterized in that**
(ii) a plurality of second type EC sensors which are absolute sensors (129) configured to produce from the test object (50) second signals indicative of a lift-off distance of said orthogonal and absolute EC sensors (128, 129) relative to said test object, said EC coil arrangement being configured so that a pre-determined ratio is established between said second signals and said first signals, at different lift-off distances;
(b) a setup table comprising calibration values for said orthogonal EC sensors (128) with corresponding lift-off compensation values for said channels based on said second signals; and
(c) an acquisition unit responsive to said calibration and lift-off compensation values in said setup table and to said second signals and configured to convert said first signals obtained from said orthogonal EC sensors (128) during actual testing of said test object, so as to obtain third signals which are representative of said flaws in said test object, said third signals being substantially independent of actual lift-off distances prevailing between said EC sensors and said test object (50) at the time of obtaining said first signals doing said actual testing.

2. The system of claim 1, wherein the EC array probe is provided on a printed circuit board.

3. The system of claim 1, wherein said EC array probe comprises overlapping coils configured as driver and receiver coils.

4. The system of claim 2, wherein said plurality of first type EC sensors (128) are configured to generate a first set of orthogonal channels that extend along a first line.

5. The system of claim 4, wherein said plurality of second type EC sensors (128) are arranged so that absolute channels are arranged along at least one line, that extends parallel to said first line.

6. The system of claim 5, wherein at least one pair of said absolute channels physically sandwich said orthogonal channels.

7. The system of claim 6, wherein an average of two absolute, channel sensitive areas are used to obtain a lift-off value for a corresponding orthogonal channel.

8. The system of claim 1, wherein said absolute channels are located not to be in line with longitudinal or transversal test object cracks when said cracks are located on a sensitive area of an orthogonal channel.

9. The system of claim 1, wherein said acquisition unit is effective to drive the first type and second type channel sensors simultaneously.

10. The system of claim 1, wherein corresponding first type and second type channels use same sets of drive coils to enable faster acquisition and more stable signals.

11. The system of claim 3, wherein said driver coils are connected as part of an impedance bridge to realize the absolute channels.

12. The system of claim 1, wherein said system is configured as a differential Eddy Current array probe.

13. The system of claim 1, wherein said absolute EC sensors are formed of physical coils which also form said orthogonal EC sensors (128).

14. The system of claim 2, wherein said probes are arranged in at least four layers on said circuit board.

15. The system of claim 2, wherein said EC array probe comprises GMR sensors.

16. The system of claim 2, wherein said EC array probe comprises AMR sensors.

17. The system of claim 2, wherein said EC array probe comprises Hall Effect sensors.

18. A method for testing an object using an EC (Eddy Current) system, the method comprising the steps of:
providing an EC array probe including: (i) a plurality of first type EC sensors (128) arranged in a plurality of channels and configured to induce eddy currents in a test object and to output first signals representative of flaws in the test object; and (ii) a plurality of second type EC sensors (129) arranged in channels and configured to produce from the test object second signals indicative of a lift-off distance of said first type and second type EC sensors (128, 129) relative to said test object, said EC coil arrangement being configured so that a substantially pre-determined ratio is established between said second signals and said first signals, at different lift-off distances;
performing a probe array system setup including storing at least a gain value on each orthogonal channel relative to a known calibration notch using the first type EC sensors (128);
obtaining relative to each orthogonal channel an amplitude vector value by using said second type EC sensors (129); wherein said first type sensors are orthogonal sensors (128) and said second type sensors are absolute sensors (129), and
storing said gain and amplitude vector values in a setup table.

19. The method of claim 18, further including performing a data acquisition procedure comprising:
acquiring actual Eddy Current data for said first type channels and second type channels relative to said object, said data including raw orthogonal data and raw absolute data for each channel;
calculating amplitude vector lengths; and
compensating said raw orthogonal data for lift-off effects utilizing said absolute vector lengths and applying said calibration gain values to obtain third signal which are representative of flaws in said object and independent of said lift off distances.

20. The method of claim 19, wherein said system setup step includes setting a phase rotation value and a gain value at each orthogonal channel and calculating both gain and phase values at each position.

21. The method of claim 19, including acquiring said orthogonal and absolute data simultaneously during actual testing of said test object.

22. The method of claim 19, including driving said orthogonal and absolute EC sensor (128, 129) simultaneously.

23. The method of claim 19, wherein said amplitude vector values are between air and a calibration base line.

## Patentansprüche

1. EC-System (EC: eddy current, Wirbelstrom) zum Detektieren von Fehlern in einem Prüfgegenstand, wobei das System umfasst:
(a) eine EC-Anordnungs-Sonde, die mit einer Sensoranordnung ausgestattet ist, die enthält:
(i) mehrere EC-Sensoren eines ersten Typs, die orthogonale Sensoren (128) sind, die in Kanälen angeordnet sind und dazu ausgebildet sind, Wirbelströme in dem Prüfgegenstand zu induzieren und abzutasten und erste Signale auszugeben, die Fehler in dem Prüfgegenstand repräsentieren; **gekennzeichnet durch**
(ii) mehrere EC-Sensoren eines zweiten Typs, die absolute Sensoren (129) sind, die dazu ausgebildet sind, von dem Prüfgegenstand (50) zweite Signale zu erzeugen, die einen Abhebeabstand der orthogonalen und der absoluten EC-Sensoren (128, 129) in Bezug auf den Prüfgegenstand angeben, wobei die EC-Spulenanordnung derart ausgebildet ist, dass in verschiedenen Abhebeabständen zwischen den zweiten Signalen und den ersten Signalen ein vorgegebenes Verhältnis erzielt wird;
(b) eine Einrichtungstabelle, die Kalibrierungswerte für die orthogonalen EC-Sensoren (128) mit entsprechenden Abhebekompensationswerten für die Kanäle auf der Grundlage der zweiten Signale umfasst; und
(c) eine Erfassungseinheit, die auf die Kalibrierungs- und Abhebekompensationswerte in der Einrichtungstabelle und auf die Signale anspricht und die zum Umsetzen der von den orthogonalen EC-Sensoren (128) erhaltenen ersten Signale während der tatsächlichen Prüfung des Prüfgegenstands ausgebildet ist, um dritte Signale zu erhalten, die die Fehler in dem Prüfgegenstand repräsentieren, wobei die dritten Signale von den tatsächlichen zwischen den EC-Sensoren und dem Prüfgegenstand (50) herrschenden Abhebeabständen zu der Zeit, zu der die ersten Signale erhalten werden, die die tatsächliche Prüfung vornehmen, im Wesentlichen unabhängig sind.

2. System nach Anspruch 1, wobei die EC-Anordnungs-Sonde auf einer Leiterplatte bereitgestellt ist.

3. System nach Anspruch 1, wobei die EC-Anordnungs-Sonde überlappende Spulen, die als Treiber- und Empfängerspulen konfiguriert sind, umfasst.

4. System nach Anspruch 2, wobei die mehren EC-Sensoren (128) vom ersten Typ zum Erzeugen eines ersten Satzes orthogonaler Kanäle, die entlang einer ersten Linie verlaufen, ausgebildet sind.

5. System nach Anspruch 4, wobei die mehren EC-Sensoren (128) vom zweiten Typ so angeordnet sind, dass absolute Kanäle wenigstens entlang einer Linie angeordnet sind, die parallel zu der ersten Linie verläuft.

6. System nach Anspruch 5, wobei die orthogonalen Kanäle physikalisch wenigstens zwischen einem Paar der absoluten Kanäle liegen.

7. System nach Anspruch 6, wobei ein Mittelwert zweier absoluter, kanalempfindlicher Bereiche verwendet wird, um einen Abhebewert für einen entsprechenden orthogonalen Kanal zu erhalten.

8. System nach Anspruch 1, wobei die absoluten Kanäle so gelegen sind, dass sie nicht auf Längs- oder Querrisse des Prüfgegenstands ausgerichtet sind, wenn die Risse in einem empfindlichen Bereich eines orthogonalen Kanals gelegen sind.

9. System nach Anspruch 1, wobei die Erfassungseinheit das gleichzeitige Ansteuern der Kanalsensoren vom ersten Typ und vom zweiten Typ bewirkt.

10. System nach Anspruch 1, wobei einander entsprechende Kanäle vom ersten Typ und vom zweiten Typ dieselben Sätze von Ansteuerspulen verwenden, um eine schnellere Erfassung und stabilere Signale zu ermöglichen.

11. System nach Anspruch 3, wobei die Treiberspulen als Teil einer Impedanzbrücke verbunden sind, um die absoluten Kanäle zu verwirklichen.

12. System nach Anspruch 1, wobei das System in einer Differential-Wirbelstromanordnungs-Sonde ausgebildet ist.

13. System nach Anspruch 1, wobei die absoluten EC-Sensoren aus physikalischen Spulen gebildet sind, die ebenfalls die orthogonalen EC-Sensoren (128) bilden.

14. System nach Anspruch 2, wobei die Sonden auf der Leiterplatte wenigstens in vier Schichten angeordnet sind.

15. System nach Anspruch 2, wobei die EC-Anordnungs-Sonde GMR-Sensoren umfasst.

16. System nach Anspruch 2, wobei die EC-Anordnungs-Sonde AMR-Sensoren umfasst.

17. System nach Anspruch 2, wobei die EC-Anordnungs-Sonde Hall-Effekt-Sensoren umfasst.

18. Verfahren zum Prüfen eines Gegenstands unter Verwendung eines EC-Systems (EC: eddy current, Wirbelstrom), wobei das Verfahren die folgenden Schritte umfasst:
Bereitstellen einer EC-Anordnungs-Sonde, die enthält: (i) mehrere EC-Sensoren (128) eines ersten Typs, die in mehreren Kanälen angeordnet sind und dazu ausgebildet sind, Wirbelströme in einem Prüfgegenstand zu induzieren und erste Signale auszugeben, die Fehler in dem Prüfgegenstand repräsentieren; und (ii) mehrere EC-Sensoren (129) eines zweiten Typs, die in Kanälen angeordnet sind und dazu ausgebildet sind, von dem Prüfgegenstand zweite Signale zu erzeugen, die einen Abhebeabstand der EC-Sensoren (128, 129) vom ersten Typ und vom zweiten Typ in Bezug auf den Prüfgegenstand angeben, wobei die EC-Spulenanordnung derart ausgebildet ist, dass in verschiedenen Abhebeabständen zwischen den zweiten Signalen und den ersten Signalen im Wesentlichen ein vorgegebenes Verhältnis erzielt wird;
Ausführen einer Sondenanordnungs-Systemeinrichtung einschließlich des Speicherns wenigstens eines Verstärkungswerts an jedem orthogonalen Kanal in Bezug auf eine bekannte Kalibrierungskerbe unter Verwendung von EC-Sensoren (128) des ersten Typs;
Erhalten eines Amplitudenvektorwerts in Bezug auf jeden orthogonalen Kanal unter Verwendung der EC-Sensoren (129) des zweiten Typs; wobei die Sensoren vom ersten Typ orthogonale Sensoren (128) sind und die Sensoren des zweiten Typs absolute Sensoren (129) sind,
und
Speichern der Verstärkungs- und der Amplitudenvektorwerte in einer Einrichtungstabelle.

19. Verfahren nach Anspruch 18, das ferner das Ausführen einer Datenerfassungsprozedur enthält, die umfasst:
Erfassen tatsächlicher Wirbelstromdaten für die Kanäle des ersten Typs und für die Kanäle des zweiten Typs in Bezug auf den Gegenstand, wobei die Daten orthogonale Rohdaten und absolute Rohdaten für jeden Kanal enthalten;
Berechnen von Amplitudenvektorlängen; und
Kompensieren der orthogonalen Rohdaten für Abhebeeffekte unter Nutzung der Absolutvektorlängen und Anwenden der Kalibrierungsverstärkungswerte, um ein drittes Signal zu erhalten, das Fehler in dem Gegenstand repräsentiert und unabhängig von den Abhebeabständen ist.

20. Verfahren nach Anspruch 19, wobei der Systemeinrichtungsschritt das Einrichten eines Phasendrehungswerts und eines Verstärkungswerts bei jedem orthogonalen Kanal und das Berechnen sowohl von Verstärkungs- als auch von Phasenwerten an jeder Position enthält.

21. Verfahren nach Anspruch 19, das das gleichzeitige Erfassen der orthogonalen und der absoluten Daten während der tatsächlichen Prüfung des Prüfgegenstands enthält.

22. Verfahren nach Anspruch 19, das das gleichzeitige Ansteuern des orthogonalen und des absoluten EC-Sensors (128, 129) enthält.

23. Verfahren nach Anspruch 19, wobei die Amplitudenvektorwerte zwischen Luft und einer Kalibrierungsgrundlinie liegen.

## Revendications

1. Système EC (à courants de Foucault) pour détecter des défauts dans un objet d'essai, le système comprenant :
(a) une sonde à réseau EC configurée avec un agencement de capteurs incluant :
(i) une pluralité de capteurs EC de premier type qui sont des capteurs orthogonaux (128) agencés dans des canaux et configurés pour induire des courants de Foucault dans l'objet d'essai et pour détecter et émettre des premiers signaux représentatifs de défauts dans l'objet d'essai ; **caractérisé en ce que**
(ii) une pluralité de capteurs EC de second type qui sont des capteurs absolus (129) configurés pour produire à partir de l'objet d'essai (50) des deuxièmes signaux indicateurs d'une distance de retrait desdits capteurs EC orthogonaux et absolus (128, 129) par rapport audit objet d'essai, ledit agencement de bobines EC étant configuré de sorte qu'un rapport prédéterminé est établi entre lesdits deuxièmes signaux et lesdits premiers signaux à différentes distances de retrait ;
(b) un tableau de configuration comprenant des valeurs d'étalonnage pour lesdits capteurs EC orthogonaux (128) avec des valeurs de compensation de retrait correspondantes pour lesdits canaux en fonction desdits deuxièmes signaux ; et
(c) un module d'acquisition réactif auxdites valeurs d'étalonnage et de compensation de retrait dans ledit tableau de configuration et auxdits deuxièmes signaux et configuré pour convertir lesdits premiers signaux obtenus depuis lesdits capteurs EC orthogonaux (128) au cours du véritable essai dudit objet d'essai de manière à obtenir des troisièmes signaux qui sont représentatifs desdits défauts dans ledit objet d'essai, lesdits troisièmes signaux étant essentiellement indépendants de distances de retrait réelles prédominant entre lesdits capteurs EC et ledit objet d'essai (50) au moment d'obtenir lesdits premiers signaux qui font ledit véritable essai.

2. Système selon la revendication 1, dans lequel la sonde à réseau EC est prévue sur une carte de circuit imprimé.

3. Système selon la revendication 1, dans lequel ladite sonde à réseau EC comprend des bobines qui se chevauchent, configurées comme bobines d'entraînement et de réception.

4. Système selon la revendication 2, dans lequel ladite pluralité de capteurs EC de premier type (128) est configurée pour générer un premier ensemble de canaux orthogonaux qui s'étendent le long d'une première ligne.

5. Système selon la revendication 4, dans lequel ladite pluralité de capteurs EC de second type (128) est agencée de sorte que des canaux absolus sont agencés le long d'au moins une ligne qui s'étend parallèlement à ladite première ligne.

6. Système selon la revendication 5, dans lequel au moins une paire desdits canaux absolus prend physiquement en sandwich lesdits canaux orthogonaux.

7. Système selon la revendication 6, dans lequel une moyenne de deux zones absolues sensibles au canal sont utilisées pour obtenir une valeur de retrait pour un canal orthogonal correspondant.

8. Système selon la revendication 1, dans lequel lesdits canaux absolus sont situés pour ne pas être en ligne avec des fissures d'objet d'essai longitudinales ou transversales lorsque lesdites fissures sont situées sur une zone sensible d'un canal orthogonal.

9. Système selon la revendication 1, dans lequel ledit module d'acquisition est efficace pour entraîner les capteurs de canal de premier type et de second type simultanément.

10. Système selon la revendication 1, dans lequel des canaux de premier type et de second type correspondants utilisent des mêmes ensembles de bobines d'entraînement pour permettre une acquisition plus rapide et des signaux plus stables.

11. Système selon la revendication 3, dans lequel lesdites bobines d'entraînement sont connectées dans le cadre d'un pont d'impédance pour réaliser les canaux absolus.

12. Système selon la revendication 1, dans lequel ledit système est configuré comme sonde à réseau à courants de Foucault différentiels.

13. Système selon la revendication 1, dans lequel lesdits capteurs EC absolus sont formés de bobines physiques qui forment également lesdits capteurs EC orthogonaux (128).

14. Système selon la revendication 2, dans lequel lesdites sondes sont agencées en au moins quatre couches sur ladite carte de circuit.

15. Système selon la revendication 2, dans lequel ladite sonde à réseau EC comprend des capteurs GMR.

16. Système selon la revendication 2, dans lequel ladite sonde à réseau EC comprend des capteurs AMR.

17. Système selon la revendication 2, dans lequel ladite sonde à réseau EC comprend des capteurs à effet Hall.

18. Procédé pour tester un objet en utilisant un système EC (à courants de Foucault), le procédé comprenant les étapes consistant à :
fournir une sonde à réseau EC incluant : (i) une pluralité de capteurs EC de premier type (128) agencés dans une pluralité de canaux et configurés pour induire des courants de Foucault dans un objet d'essai et pour émettre des premiers signaux représentatifs de défauts dans l'objet d'essai ; et (ii) une pluralité de capteurs EC de second type (129) agencés dans des canaux et configurés pour produire à partir de l'objet d'essai des deuxièmes signaux indicateurs d'une distance de retrait desdits capteurs EC de premier type et de second type (128, 129) par rapport audit objet d'essai, ledit agencement de bobines EC étant configuré de sorte qu'un rapport essentiellement prédéterminé est établi entre lesdits deuxièmes signaux et lesdits premiers signaux à différentes distances de retrait ;
réaliser une configuration de système de réseau de sondes incluant stocker au moins une valeur de gain sur chaque canal orthogonal par rapport à une encoche d'étalonnage connue en utilisant les capteurs EC de premier type (128) ;
obtenir par rapport à chaque canal orthogonal une valeur de vecteur d'amplitude en utilisant lesdits capteurs EC de second type (129) ; dans lequel lesdits capteurs de premier type sont des capteurs orthogonaux (128) et lesdits capteurs de second type sont des capteurs absolus (129),
et
stocker lesdites valeurs de gain et de vecteur d'amplitude dans un tableau de configuration.

19. Procédé selon la revendication 18, incluant en outre réaliser une procédure d'acquisition de données comprenant :
acquérir des données de courants de Foucault réelles pour lesdits canaux de premier type et canaux de second type par rapport audit objet, lesdites données incluant des données orthogonales brutes et des données absolues brutes pour chaque canal ;
calculer des longueurs de vecteur d'amplitude ; et
compenser lesdites données orthogonales brutes pour des effets de retrait en utilisant lesdites longueurs de vecteur absolues et appliquant lesdites valeurs de gain d'étalonnage pour obtenir des troisièmes signaux qui sont représentatifs de défauts dans ledit objet et indépendants desdites distances de retrait.

20. Procédé selon la revendication 19, dans lequel ladite étape de configuration de système inclut régler une valeur de rotation de phase et une valeur de gain au niveau de chaque canal orthogonal et calculer à la fois des valeurs de gain et de phase en chaque position.

21. Procédé selon la revendication 19, incluant acquérir lesdites données orthogonales et absolues simultanément au cours du véritable essai dudit objet d'essai.

22. Procédé selon la revendication 19, incluant entraîner lesdits capteurs EC orthogonaux et absolus (128, 129) simultanément.

23. Procédé selon la revendication 19, dans lequel lesdites valeurs de vecteur d'amplitude sont entre l'air et une ligne de référence d'étalonnage.
